# FASCICULE DE BREVET EUROPEEN

(11) **EP 0 909 926 B1**
(45) Date de publication et mention de la délivrance du brevet: **10.03.2004**
(21) Numéro de dépôt: 98420188.9
(22) Date de dépôt: 13.10.1998
(51) Int. Cl.: F24F 7/08, F24F 11/00, F24F 12/00

(54) **Système de ventilation à double flux**
Belüftungssystem mit Doppelströmung
Double flow ventilation system

(30) Priorité: 14.10.1997 FR 9713074
(43) Date de publication de la demande: 21.04.1999
(73) Titulaire: ALDES AERAULIQUE, 69200 Venissieux Cedex (FR)
(72) Inventeur: Pelleter, Xavier, 31130 Quint Fonsegrives (FR); Boulanger, Xavier, 31100 Toulouse (FR)
(74) Mandataire: Maureau, Philippe

(56) Documents cités:
- WO-A-94/20798
- WO-A-97/06390
- FR-A- 2 556 080
- GB-A- 2 244 148

## Description

La présente invention concerne un système de ventilation à double flux, destiné par exemple à la ventilation d'une maison individuelle.

Un tel système permet dans une maison d'assurer simultanément une insufflation d'air dans des pièces principales (salon, salle à manger, chambres... ) et une extraction d'air dans des pièces techniques (cuisines, sanitaires,... ). L'air extrait est rejeté hors de la maison tandis que l'air insufflé est pris à l'extérieur de la maison. On a alors un double flux d'air.

Il est connu d'intégrer des éléments thermodynamiques aux systèmes de ventilation à double flux. En effet, en partant de la constatation que notamment en hiver, l'air extrait et rejeté à l'extérieur est chaud et que l'air insufflé est froid, des systèmes d'échangeurs de chaleur ont été mis au point. L'air rejeté sert à réchauffer l'air insufflé de l'extérieur. Ainsi l'air rejeté à l'extérieur est moins chaud et l'air insufflé à l'intérieur est moins froid.

Il est également connu de préchauffer l'air insufflé, à l'aide par exemple de résistances chauffantes.

Pour chauffer ou refroidir de façon sensible l'air d'une maison, les débits d'air à insuffler sont relativement importants. Ils sont bien plus grands que les débits d'air nécessaires pour assurer un bon renouvellement de l'air. A titre d'exemple, pour une pièce, si un débit de 25m³/h permet d'assurer le renouvellement d'air, un débit de l'ordre de 150m³/h est nécessaire pour augmenter ou diminuer de façon sensible la température de cette pièce.

Le document WO-97/06390 révèle un dispositif permettant un renouvellement d'air et son conditionnement. Une pompe à chaleur équipe ce dispositif et l'air insufflé peut être chauffé ou bien rafraîchi. Deux ventilateurs assurent d'une part l'insufflation d'air et d'autre part le rejet d'air vers l'extérieur. Le dispositif comporte en outre quatre chambres - une chambre d'évacuation d'air, une chambre de recyclage d'air, une chambre d'alimentation en air et une chambre d'air frais - et un clapet destiné à réguler les transferts d'air entre les chambres.

Un tel dispositif ne garantit pas une extraction d'air. Le clapet peut, dans une position, isoler la chambre d'évacuation de l'air et la chambre d'air frais des chambres de recyclage d'air et d'alimentation en air. L'air à l'intérieur de la maison est alors uniquement recyclé.

Dans les autres positions du clapet, il y a une extraction d'air dans la maison, mais elle n'est pas du tout régulée. Dans tous les cas, l'insufflation d'air est prévue pour permettre de chauffer ou refroidir les pièces ventilées.

La présente invention a alors pour but de fournir un système de ventilation à double flux qui permet d'assurer à la fois une ventilation régulée pour permettre un bon renouvellement de l'air (indispensable pour la salubrité de la maison), mais qui autorise aussi des débits importants d'air sans perturber la ventilation régulée. Ces débits plus importants conviennent pour l'utilisation d'une machine thermodynamique telle par exemple une pompe à chaleur, mais aussi lorsqu'on souhaite moduler la ventilation dans certaines pièces de la maison.

Avantageusement, le système selon l'invention sera auto-régulé pour permettre une parfaite maîtrise des flux d'air et pourra recevoir une machine thermodynamique permettant le réchauffage ou le rafraîchissement de l'air insufflé.

Le système selon l'invention est un système ventilation à double flux destiné à équiper un local comportant plusieurs pièces, comportant une centrale, au moins une bouche d'extraction destinée à extraire de l'air d'une pièce et au moins une bouche d'insufflation destinée à insuffler de l'air dans une pièce, la centrale présentant une enveloppe extérieure avec deux entrées et deux sorties, une entrée et une sortie étant reliées à l'extérieur du local et une entrée et une sortie étant reliées à l'intérieur du local, deux ventilateurs ou similaires permettant d'aspirer de l'air par une entrée pour l'envoyer vers une sortie, des cloisons délimitant des chambres à chacune desquelles correspond soit une entrée, soit une sortie, et un clapet permettant de modifier les transferts d'air entre les chambres.

Selon l'invention, une entrée supplémentaire débouchant dans la chambre associée à la sortie vers l'extérieur est prévue dans la centrale, cette entrée supplémentaire étant reliée à au moins une bouche d'extraction ; chaque ventilateur est muni de moyens lui permettant de fonctionner avec au moins deux débits distincts, et au moins une bouche d'insufflation est prévue pour le passage des flux d'air de débits différents.

Ainsi l'air aspiré par l'entrée supplémentaire peut être évacué, quel que soit le positionnement du clapet et le mode de fonctionnement du système. En outre, grâce aux ventilateurs à débits multiples et aux bouches aux débits associés, il est possible d'avoir plusieurs régimes de ventilation.

Pour permettre un bon équilibrage entre les flux d'air entrant et sortant du local, le système comporte avantageusement une dérivation entre l'entrée d'air reliée à l'extérieur ou bien la chambre correspondante et la chambre associée à la sortie de la centrale vers l'intérieur du local. Dans ce cas, le flux passant par chaque bouche d'aspiration reliée à l'entrée supplémentaire est de préférence régulé et le flux à travers la dérivation est de préférence régulé de telle sorte que le flux à travers la dérivation est sensiblement égal au flux d'air entrant dans la centrale par l'entrée supplémentaire.

Dans une première forme de réalisation, le clapet permettant de modifier les transferts d'air entre les chambres est une paroi mobile placée au coeur de la centrale et délimitant les chambres de celle-ci. Cette paroi mobile est par exemple montée pivotante entre une première position où sont mises en communication d'une part la chambre associée à la sortie reliée vers l'extérieur du local et la chambre associée à l'entrée reliée à l'intérieur du local, et d'autre part la chambre associée à l'entrée reliée vers l'extérieur du local et la chambre associée à la sortie reliée à l'intérieur du local, et une seconde position où sont mises en communication d'une part la chambre associée à la sortie reliée vers l'extérieur du local et la chambre associée à l'entrée reliée à l'extérieur du local, et d'autre part la chambre associée à l'entrée reliée vers l'intérieur du local et la chambre associée à la sortie reliée à l'intérieur du local.

Dans une seconde forme de réalisation, mettant en oeuvre une dérivation telle que décrite plus haut, le clapet permettant de modifier les transferts d'air entre les chambres est monté au niveau de l'entrée reliée à l'extérieur du local, la dérivation étant placée en amont du clapet. Par rapport à la première forme de réalisation, celle-ci est avantageuse car elle permet de plus facilement réaliser une bonne étanchéité au niveau du clapet.

Pour purifier l'air insufflé dans le local, des moyens de filtration peuvent être prévus, en amont des bouches d'insufflation. Ces moyens de filtration peuvent trouver leur place au niveau de la sortie vers l'intérieur du local mais également à d'autres endroits, par exemple en amont de la centrale.

Le système selon l'invention, grâce à sa possibilité d'augmenter le débit d'air ventilé, est particulièrement bien adapté au cas où un système thermodynamique permettant de réchauffer ou de rafraîchir est intégré dans la centrale. Avantageusement, le système thermodynamique est équipé de moyens moteurs lui permettant de fonctionner à au moins deux puissances distinctes. Pour ce faire, on a de préférence deux compresseurs de puissances distinctes. Le système thermodynamique utilisé comporte par exemple un condenseur et un évaporateur, chacun de ceux-ci étant associé à un ventilateur ou similaire.

Dans une forme de réalisation préférentielle, chaque bouche d'insufflation à débit variable est alimentée par deux canaux d'air, chaque canal étant à débit régulé et l'un des canaux présentant un volet ou similaire, dont l'ouverture et la fermeture sont commandées par un utilisateur et qui permet ou empêche de laisser passer de l'air vers la bouche d'insufflation.

Pour une meilleure ergonomie du système, des moyens de commande sont avantageusement prévus pour choisir le débit d'air souhaité dans chaque bouche d'insufflation à débit variable.

L'invention concerne également une unité centrale pour un système de ventilation à double flux telle que décrite ci-dessus, comportant une enveloppe extérieure avec deux entrées et deux sorties, deux ventilateurs ou similaires permettant d'extraire de l'air par une entrée pour l'envoyer vers une sortie, des cloisons délimitant des chambres à chacune desquelles correspond soit une entrée, soit une sortie, et un clapet permettant de modifier les transferts d'air entre les chambres, caractérisé en ce qu'une entrée supplémentaire débouchant dans une chambre associée à une sortie est prévue, et en ce que chaque ventilateur est muni de moyens lui permettant de fonctionner avec au moins deux débits distincts.

Cette unité comporte de préférence une dérivation entre une entrée ou bien la chambre correspondante et la chambre associée à la sortie ne recevant pas l'entrée supplémentaire. Dans ce cas, des moyens sont avantageusement prévus pour réguler le flux d'air à travers la dérivation.

Dans une première forme de réalisation, le clapet permettant de modifier les transferts d'air entre les chambres est une paroi mobile placée au coeur de la centrale et délimitant les chambres de celle-ci. Dans ce cas, la paroi mobile est par exemple montée pivotante entre une première position où sont mises en communication d'une part la chambre associée à une première sortie et la chambre associée à une première entrée, et d'autre part la chambre associée à une seconde entrée et la chambre associée à une seconde sortie, et une seconde position où sont mises en communication d'une part la chambre associée à la première sortie et la chambre associée à la seconde entrée, et d'autre part la chambre associée à la première entrée et la chambre associée à la seconde sortie.

Dans une seconde forme de réalisation, qui est la forme de réalisation préférée, le clapet permettant de modifier les transferts d'air entre les chambres est monté au niveau de l'entrée associée à la dérivation, la dérivation étant placée en amont du clapet.

Des moyens de filtration peuvent aussi être prévus au niveau d'une sortie.

Un système thermodynamique permettant de réchauffer ou de rafraîchir peut être avantageusement intégré à cette unité centrale. Ce système est de préférence équipé de moyens moteurs lui permettant de fonctionner à au moins deux puissances distinctes. Il comporte alors par exemple deux compresseurs de puissances distinctes. Il peut aussi comporter un ou deux condenseurs et un ou deux évaporateurs, chacun de ceux-ci étant associé à un ventilateur ou similaire.

De toute façon, l'invention sera bien comprise à l'aide de la description qui suit, en référence au dessin schématique annexé, représentant à titre d'exemple non limitatif un système de ventilation et une unité centrale selon l'invention.
Figure 1 est une vue schématique d'un système selon l'invention fonctionnant selon un mode de ventilation petite allure, ou rafraîchie, ou préchauffée, ou normale ;
Figure 2 est une vue semblable à celle de la figure 1 avec un fonctionnement en mode de ventilation grande allure, ou rafraîchie, ou préchauffée, ou normale ;
Figure 3 correspond au fonctionnement en mode de ventilation grande allure, rafraîchie ou préchauffée, recyclée ;
Figures 4 à 6 sont des vues schématiques d'une variante de réalisation fonctionnant respectivement dans les modes de réalisation des figures 1 à 3 ;
Figure 7 représente schématiquement en coupe un module de régulation pour une bouche d'insufflation à débit variable ; et
Figure 8 représente une bouche d'insufflation à débit variable insérée dans un plafond.

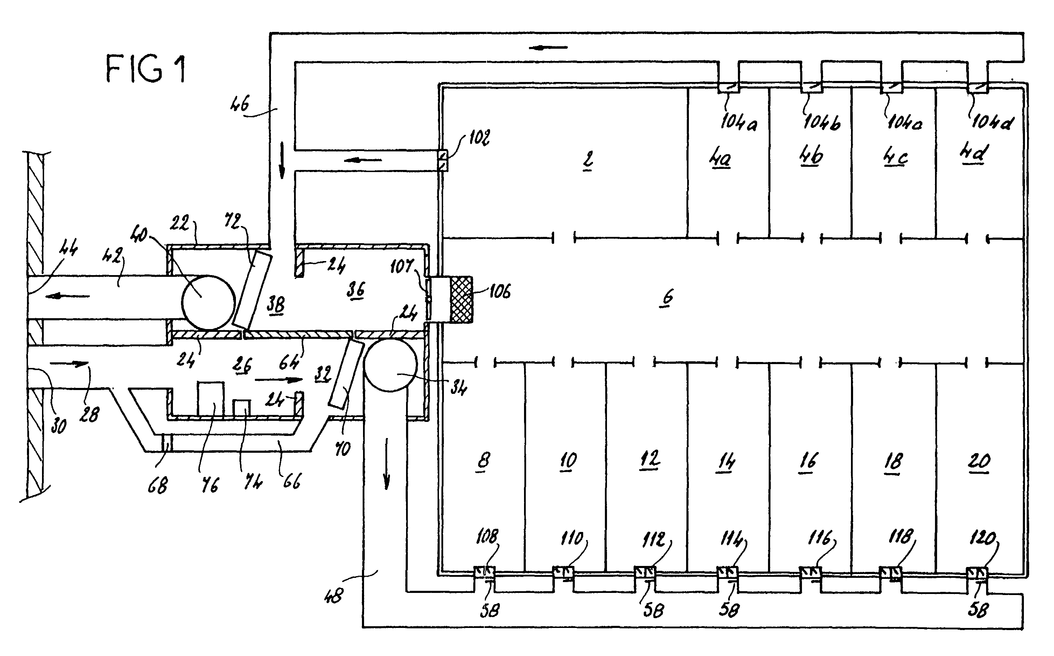

Les figures 1 à 3 montrent schématiquement une habitation et un système de ventilation à double flux destiné à assurer le renouvellement d'air de cette habitation.

Cette habitation comporte une cuisine 2, des locaux techniques 4a, 4b, 4c et 4d, un hall 6 et des pièces de vie 8, 10, 12, 14, 16, 18 et 20.

Le système de ventilation doit assurer en permanence l'extraction d'air dans la cuisine 2 et les locaux techniques 4a à d et l'insufflation d'air neuf ou préchauffé dans les pièces 8 à 20. Dans la cuisine, l'extraction peut se faire avec deux débits différents, tandis que dans les autres locaux techniques, le débit d'extraction est sensiblement constant. A titre purement indicatif et pour donner un exemple numérique, on a dans la cuisine 2 un débit de 45m³/h ou de 135m³/h et dans les autres locaux techniques une extraction de 30m³/h d'air. Quant au débit d'air insufflé dans les pièces 8 à 20, il est de l'ordre de 25m³/h. De même que toutes les valeurs numériques indiquées ci-après, ces valeurs illustrent l'exemple décrit et ne sauraient être limitatives de la portée de la présente demande de brevet.

Le système de ventilation comporte une centrale prenant place dans un caisson 22, des entrées et des sorties d'air, des conduits, et des bouches d'extraction et des bouches de ventilation.

Le caisson 22 comporte quatre compartiments, séparés par des cloisons 24 :
- un premier compartiment 26 reçoit l'air neuf pris hors de l'habitation. Il est relié par un conduit 28 à une entrée d'air neuf 30 ;
- un second compartiment 32 est équipé d'un ventilateur 34 permettant l'alimentation en air des pièces 8 à 20 ;
- un troisième compartiment 36 reçoit l'air aspiré dans le hall 6 par une bouche d'extraction 106 ;
- un quatrième compartiment 38 est équipé d'un ventilateur 40 permettant l'évacuation d'air vers l'extérieur de l'habitation. Un conduit 42 relie ce compartiment 38 à une sortie d'air 44.

Chacun des ventilateurs 34, 40 est muni d'un variateur de vitesse ou similaire.

La cuisine 2 est munie d'une bouche d'extraction 102 permettant d'aspirer l'air selon deux débits distincts. Chaque pièce technique 4a à d est quant à elle munie d'une bouche d'aspiration 104a à d auto-régulée à un seul débit. Les bouches d'extraction 102 et 104a à d sont reliées à un conduit 46 qui débouche dans le quatrième compartiment 38 de la centrale. Ce compartiment 38 comporte donc une entrée et une sortie d'air, en plus des liaisons existantes à l'intérieur du caisson 22 avec les autres compartiments.

Les pièces 8 à 20 sont chacune d'elles munies d'une bouche de ventilation 108 à 120 auto-régulée à débit variable. Ces bouches sont alimentées par un conduit 48 partant du deuxième compartiment 32 du caisson. Un filtre est avantageusement prévu dans le conduit 48 afin que l'air insufflé dans les pièces 8 à 20 soit exempt de poussières et de pollens. Il est bien entendu possible de disposer ce filtre à un autre endroit, par exemple dans la chambre 32.

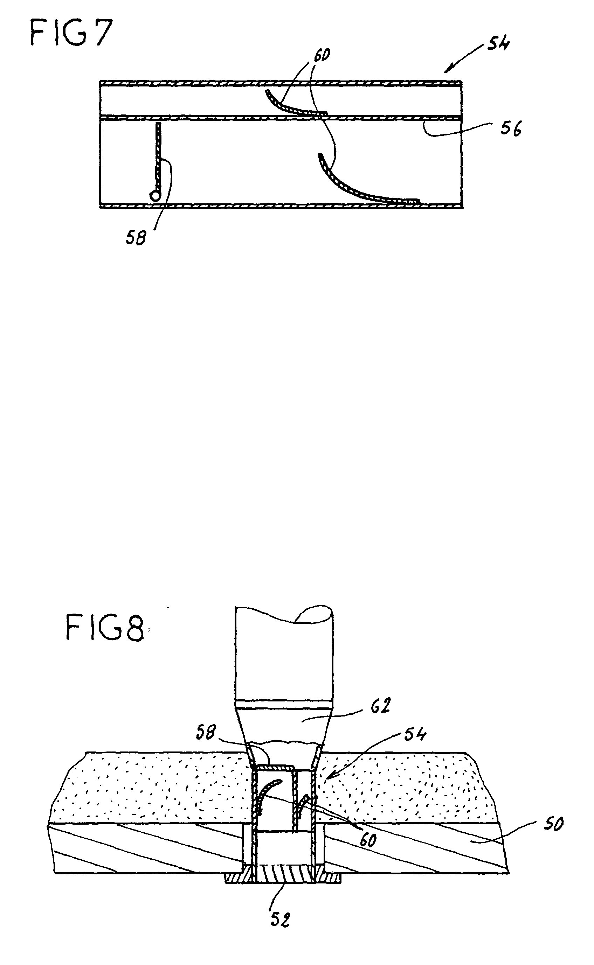

La figure 8 représente une bouche 108 équipant une pièce 8. Cette bouche 108 est montée dans le plafond 50 de la pièce 8. Une grille 52 est placée au niveau du plafond. Elle forme l'élément visible du système dans la pièce 8.

Au dessus de la grille, se trouve un module de régulation 54 tel que celui montré à la figure 7. Ce module 54 peut être un boîtier parallélépipédique dont deux faces opposées sont ouvertes pour permettre un flux d'air à travers le boîtier. Une cloison 56 partage le boîtier en deux canaux de sections différentes. Le canal de section la plus faible est à débit d'air constant, afin d'assurer le renouvellement d'air de la pièce correspondante. Ce débit est par exemple de 25m³/h. L'autre canal permet par exemple un débit de 125m³/h. Toutefois, un volet 58 peut venir obturer ce canal, comme représenté sur la figure 7. La bouche 108 peut donc fonctionner avec un débit de 25m³/h ou de 150m³/h. La régulation du débit est assurée par une lamelle flexible 60 placée dans le canal correspondant. Le fonctionnement de cette lamelle est connue de l'homme du métier. Elle est fixée à une paroi interne du canal le long du côté se trouvant en aval du flux d'air et elle est libre du côté amont. Lorsque de l'air passe dans le canal, la lamelle flexible 60 s'incurve d'autant plus que la pression est forte. En s'incurvant, elle diminue la section de passage et maintient un débit constant, et inversement. Il y a ainsi une auto-régulation qui se fait automatiquement.

Pour chaque bouche 108 à 120, le module de régulation 54 correspondant est relié par l'intermédiaire d'un adaptateur 62 de section au conduit 48. L'adaptateur 62 permet de réaliser la liaison entre un conduit de section rectangulaire et un autre de section circulaire.

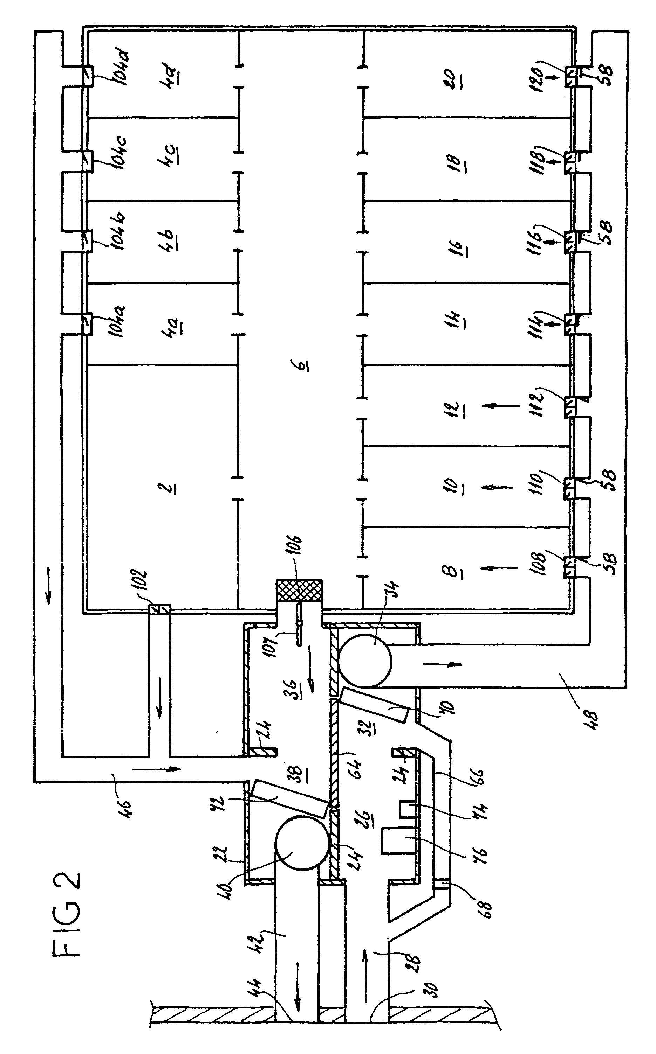

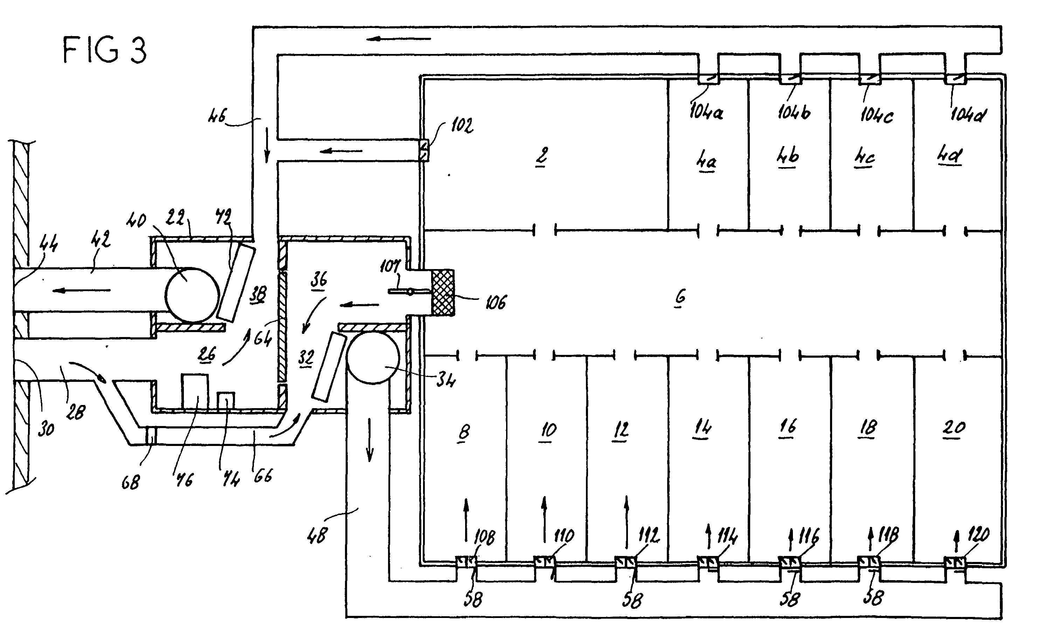

A l'intérieur du caisson 22 est placé un clapet 64 permettant de mettre de différentes manières les compartiments 26, 32, 36 et 38 en communication. Dans une première position du clapet 64 (figures 1 et 2), les premier 26 et second 32 compartiments et les troisième 36 et quatrième 38 compartiments communiquent. Dans une seconde position du clapet 64 (figure 3), les premier 26 et quatrième 38 compartiments et les second 32 et troisième 36 compartiments communiquent. Ces deux positions du clapet 64 sont obtenues par un pivotement jusqu'au cloisons 24 du clapet.

Une dérivation 66 est prévue entre le conduit 28 amenant de l'air depuis l'extérieur de l'habitation vers le premier compartiment 26 et le second compartiment 32. Un module de régulation 68 est prévu dans cette dérivation 66. Le débit d'air pouvant passer dans cette dérivation 66 est sensiblement égal au débit passant dans le conduit 46. En effet, le débit dans le conduit 46 est sensiblement constant. A petit débit il est la somme des débits sortant par les bouches d'extraction 102 à 104a à d. Seul le débit de la bouche 102 de la cuisine peut varier. On a donc dans le conduit 46 un débit relativement constant.

La centrale du système est également munie d'un système thermodynamique qui comporte un évaporateur 70 et un condenseur 72. Dans l'exemple de réalisation, l'évaporateur 70 est placé juste en amont du ventilateur 34 du second compartiment 32 qui alimente en air les pièces 8 à 20 tandis que le condenseur 72 est situé juste en amont du ventilateur 40 rejetant l'air extrait de l'habitation vers l'extérieur. Un filtre est avantageusement prévu juste en amont des condenseur et évaporateur pour les protéger des poussières se trouvant dans l'air qui circule. Ce système thermodynamique permet de rafraîchir l'air insufflé dans l'habitation, puisque l'air entrant dans les pièces 8 à 20 passe à travers l'évaporateur 70. Il est bien entendu aussi envisageable de chauffer cet air insufflé. Il suffit alors par exemple d'échanger la place de l'évaporateur 70 et du condenseur 72, ou par un système thermodynamique réversible permettant d'intervertir les rôles ; on peut ainsi soit rafraîchir l'air, soit le réchauffer, selon le souhait de l'utilisateur.

Le système thermodynamique est entraîné par un compresseur. Dans le système de ventilation représenté, deux compresseurs sont prévus. Un premier compresseur 74 est d'une puissance moindre, par exemple 1kW, tandis que le second compresseur est d'une puissance plus importante, par exemple 3kW. Ces deux compresseurs sont logés dans le premier compartiment 26 du caisson 22.

Dans une variante d'exécution, il est envisageable de n'avoir qu'un seul compresseur mais qui fonctionne à deux ou plusieurs régimes différents.

Selon l'invention, les ventilateurs 34 et 40 qui se trouvent dans le caisson 22 peuvent fonctionner à au moins deux vitesses distinctes. A chacune de ces vitesses correspond un débit d'air différent. Une vitesse peut par exemple correspondre à un débit de 150m³/h tandis que l'autre correspondrait à 550m³/h.

Le fonctionnement du système décrit ci-dessus est alors tel qu'indiqué ci-après.

Sur la figure 1, le système selon l'invention fonctionne comme une ventilation mécanique à double flux de l'état de la technique. De l'air est extrait avec un débit donné dans chaque local technique 4a à d et dans la cuisine 2 et il est rejeté à l'extérieur tandis que l'air neuf est pris à l'extérieur et insufflé dans les pièces 8 à 20.

Si le débit au niveau de la bouche 102 de la cuisine est d'environ 45m³/h, dans les pièces techniques 4a à d de 30m³/h, et si le débit insufflé dans chaque pièce 8 à 20 par les bouches 108 à 120 est de 25m³/h, on a alors un débit global de 165m³/h sortant de l'habitation et de 175m³/h entrant dans celle-ci. La différence est très faible et on peut considérer que le système est équilibré.

Dans cette configuration, le clapet 64 est disposé de telle sorte que les premier 26 et second 32 compartiments sont en communication, de même que les troisième 36 et quatrième 38.

Pour reprendre l'exemple numérique donné ci-dessus, un débit de 175m³/h est aspiré par l'entrée d'air 30, traverse le conduit 28, passe à travers les premier 26 et second 32 compartiments pour se diriger vers les bouches 108 à 120 par l'intermédiaire du conduit 48. Le ventilateur 34 fonctionne avec sa faible vitesse et le système thermodynamique n'est pas en marche.

Du côté de l'aspiration dans l'habitation, l'air aspiré dans la cuisine et les locaux techniques entre dans le quatrième compartiment 38 et passe par le conduit 42 pour sortir par la sortie d'air 44 extérieure. Le ventilateur 40 fonctionne avec sa faible vitesse.

La bouche d'extraction 106 est fermée et il n'y a pas d'échange entre les troisième 36 et quatrième 38 compartiments. Un volet 107 ferme la bouche 106.

Sur la figure 2, le système selon l'invention fonctionne dans le mode de ventilation forcée. Dans ce cas, le débit d'air insufflé dans les pièces 8, 10, et 12 n'est plus de 25m³/h mais de 150m³/h. Cette augmentation de débit peut être souhaitée si beaucoup de personnes sont dans ces pièces et si certaines d'entre elles, par exemple, fument. Les faibles débits d'air sur cette figure sont représentés par une petite flèche tandis que les débits plus importants le sont par une flèche plus grande. Les volets 58 correspondant aux bouches 108, 110 et 112 sont ouverts, tandis que ceux des bouches 114 à 120 sont fermés.

Le débit d'air insufflé dans l'habitation est donc de 550m³/h. Le ventilateur 34 fonctionne alors avec sa grande vitesse.

L'extraction d'air dans les locaux techniques 4a à d et la cuisine se fait toujours avec le même débit, soit dans notre exemple numérique, 165m³/h.

Beaucoup plus d'air est donc insufflé qu'extrait. Pour équilibrer ces débits et ne pas créer une suppression dans l'habitation, de l'air est extrait par la bouche d'extraction 106 en position ouverte du volet 107 se trouvant dans le hall 6.

Le clapet 64 dans le caisson 22 est dans la même position que pour la figure 1 et le mode de ventilation normale. Il y a ici volontairement de l'air qui passe du troisième 36 vers le quatrième 38 compartiment. Ce débit correspond sensiblement à la différence des débits insufflés (550m³/h) et extraits des locaux techniques (165m³/h), soit environ 385m³/h dans notre exemple. Le ventilateur 40 fonctionne donc également à vitesse élevée, puisqu'il fait débiter l'air avec un débit de 550m³/h.

Dans ces deux modes de fonctionnement, le système thermodynamique est au repos, ou en préchauffage, ou en rafraîchissement de l'air neuf.

La figure 3 représente un troisième mode de fonctionnement. Dans celui-ci, le système thermodynamique fonctionne et l'utilisateur souhaite par exemple un rafraîchissement des pièces 8, 10 et 12. Pour obtenir un tel rafraîchissement, il est préférable d'avoir un débit d'air élevé dans ces pièces pour apporter plus de frigories (1 frigorie = -4,185 J) à ces pièces. De plus, plutôt que d'insuffler dans ces pièces de l'air provenant exclusivement de l'extérieur (par l'entrée d'air 30), il est préférable d'insuffler de l'air qui a déjà été refroidi et qui est par exemple aspiré dans le hall 6 par la bouche 106. Dans ce mode de fonctionnement, il est impératif d'avoir toujours une extraction d'air dans les locaux techniques 4a à d et la cuisine 2 avec les mêmes débits qu'en ventilation normale. Dans ce cas, le clapet 64 est tourné environ de 90° par rapport à la position des figures 1 et 2. Le premier compartiment 26 est alors en communication avec le quatrième 38 et le second 32 avec le troisième 36.

Comme indiqué, on a toujours un flux d'air extrait de l'habitation, tandis que l'air insufflé est recyclé. Pour compenser l'air extrait dans les locaux techniques et la cuisine et rejeté à l'extérieur de l'habitation, de l'air doit être pris à l'extérieur et ventilé dans l'habitation. Cet air passe par la dérivation 66, et ne transite donc pas par le premier compartiment 26.

En reprenant l'exemple numérique précédent, le flux d'entrée par la bouche d'entrée 30 est d'environ 550m³/h. Environ 150m³/h passent alors par la dérivation 66, le restant entre dans le premier compartiment 26, traverse le quatrième compartiment 38 et est rejeté par la sortie d'air 44. Ce débit d'air est relativement important et sert à refroidir le condenseur 72 et à évacuer les calories (1 calorie = 4,185 J) dégagée au niveau du condenseur 72 lorsque le système thermodynamique fonctionne.

Environ 550m³/h sont insufflés dans les pièces 8, 10 et 12. Environ 150m³/h proviennent de la dérivation 66, tandis que les 400m³/h restant proviennent d'un recyclage effectué en extrayant de l'air déjà rafraîchi par la bouche d'extraction 106 située dans le hall 6 et en faisant repasser cet air sur l'évaporateur 70 pour le refroidir avant de l'insuffler grâce au ventilateur 34 dans le conduit 48.

La configuration de la figure 3 décrite comme permettant de réaliser un rafraîchissement du local permet également un préchauffage de celui-ci.

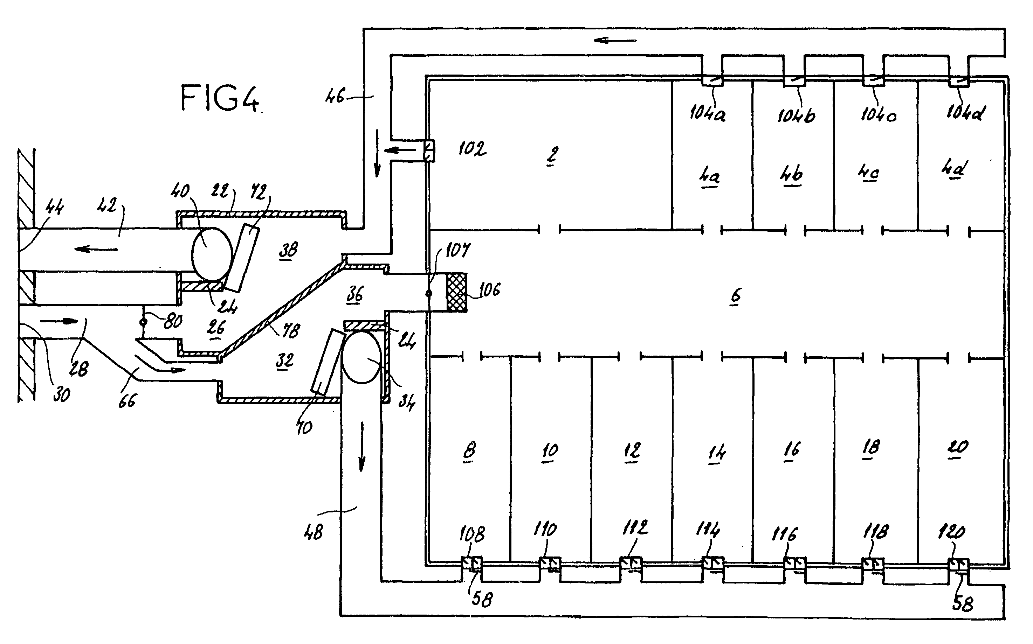

Les figures 4 à 6 représentent une seconde forme de réalisation d'un système selon l'invention. Dans ces figures, les mêmes références numériques sont reprises pour désigner des éléments semblables.

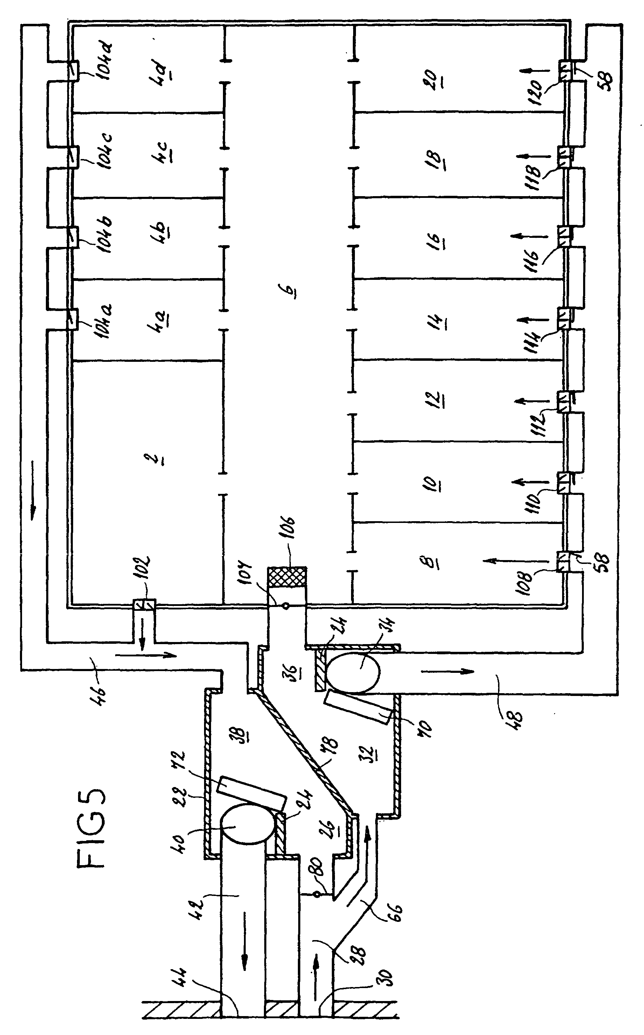

Dans la forme de réalisation des figures 1 à 3, le clapet 64 de transfert de flux est situé à l'intérieur de la centrale, au coeur de celle-ci. Dans la seconde forme de réalisation, le clapet intérieur 64 est remplacé par une paroi fixe 78 et le clapet permettant de modifier les transferts d'air entre les chambres de la centrale est placé au niveau de l'entrée reliée à l'extérieur du local et donc associée à la chambre 26. On retrouve donc un clapet extérieur 80 au niveau de cette entrée. Ce clapet extérieur 80 sert à isoler la chambre 26 de prise d'air complémentaire lorsque le système fonctionne en ventilation ou en dépollution (figures 4 et 5 respectivement). Il est alors en position fermée. Lorsqu'un rafraîchissement est souhaité, le clapet extérieur 80 s'ouvre afin de permette le passage d'air sur le condenseur 72.

La paroi fixe 78 sépare les chambres de la centrale comme le fait le clapet 64 lorsque celui-ci est dans la position représentée sur la figure 3. Les chambres 26 et 38 sont donc mises en communication et isolées des chambres 32 et 36 qui sont de leur côté également mises en communication.

La configuration du système montrée à la figure 4 correspond à la configuration montrée à la figure 1 pour la première forme de réalisation et correspond à un fonctionnement en ventilation normale. Le clapet extérieur 80 est fermé. Le flux d'air alimentant les pièces 8 à 20 passe par la dérivation 66 pour aboutir dans la chambre 32 alors que dans la première forme de réalisation, cet air traverse la chambre 26. L'exemple numérique donné plus haut en liaison avec la figure 1 reste valable ici.

La configuration du système montrée à la figure 5 correspond à une variante de la configuration montrée à la figure 2 pour la première forme de réalisation et correspond à un fonctionnement en ventilation forcée ou en dépollution. Contrairement à la configuration de la figure 2, le volet 107 reste ici en position fermée car le flux d'air insufflé dans l'habitation est sensiblement égal au flux d'air extrait de celle-ci. Le clapet extérieur 80 reste en position fermée.

Ici, le débit d'air insufflé dans la pièce 8 est de 150m³/h tandis qu'il est de 25m³/h dans les autres pièces 10 à 20. Le volet 58 correspondant à la bouche 108 est ouvert tandis que ceux des bouches 110 à 120 sont fermés. Le débit d'air insufflé est donc de 270m³/h.

L'extraction d'air dans les locaux techniques 4a à d se fait avec le même débit de 30m³/h par local et il est de 135m³/h dans la cuisine 2. L'extraction d'air se fait donc avec un débit de 255m³/h.

La faible différence de débit entre le flux entrant et le flux sortant de l'habitation ne justifie pas l'ouverture du volet 107.

Si comme dans le cas de la figure 2, les volets 110 et 112 de la figure 5 s'ouvraient, alors, comme décrit en référence à la figure 2, le volet 107 serait ouvert pour équilibrer les débits entrant et sortant.

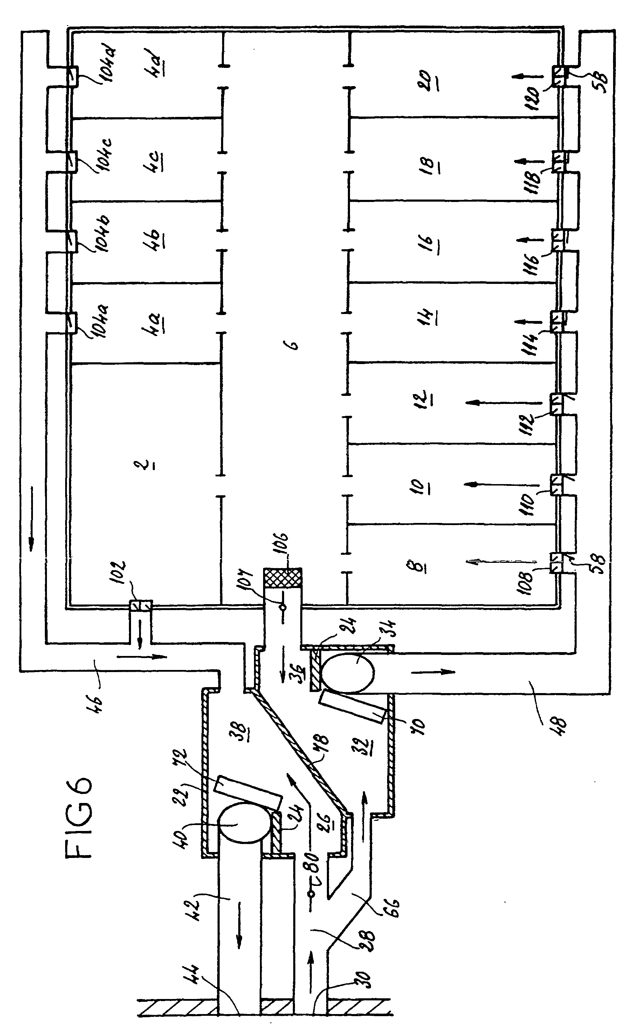

La configuration du système montrée à la figure 6 correspond à la configuration montrée à la figure 3 pour la première forme de réalisation et correspond à un fonctionnement en rafraîchissement, préchauffage ou recyclage. Le système thermodynamique fonctionne et l'utilisateur souhaite un rafraîchissement ou un préchauffage des pièces 8, 10 et 12. Le clapet extérieur 80 est en position ouverte tandis que la paroi fixe 78 occupe la même position que le volet 64 sur la figure 3. Le passage de l'air est tout à fait semblable à celui décrit en référence à la figure 3.

Le système selon l'invention permet un bon équilibrage d'un point de vue échanges d'air pour l'habitation dans tous les modes de fonctionnement. L'extraction d'air dans les locaux techniques et la cuisine est toujours assurée et n'est pas perturbée par les différents modes de fonctionnement. Cette extraction d'air est auto-régulée de façon permanente.

Le système thermodynamique permet de rafraîchir, ou de réchauffer l'habitation. Plusieurs puissances distinctes sont proposées pour pouvoir avoir un rafraîchissement (ou un réchauffage) correct quel que soit la vitesse de fonctionnement des ventilateurs.

Ce système peut facilement être équipé d'une centrale de gestion pour sélectionner à distance les zones d'habitation à rafraîchir ou à réchauffer.

Le système permet également une extraction d'air forcée (dans l'exemple donné, dans la cuisine) sur demande d'un utilisateur. Ce mode de fonctionnement n'est pas représenté sur les figures, ni décrit en détails, mais il découle aisément des explications données ci-dessus en faisant déboucher la bouche d'extraction 106 dans la cuisine 2.

Le système selon l'invention permet une maîtrise permanente du renouvellement d'air, quelle que soit la configuration du fonctionnement du système. Les bouches à débit variable permettent de sélectionner les pièces que l'on veut rafraîchir, réchauffer ou simplement ventiler plus efficacement. Dans les autres zones de l'habitation, l'insufflation de base est toujours assurée.

Pour la première fois, un système de ventilation contrôlé est associé à un système de préchauffage ou de rafraîchissement par recyclage. Le système thermodynamique associé permet de faire du rafraîchissement ou du préchauffage et est adapté dans toutes les configurations, grâce notamment aux puissances variables délivrées par les compresseurs.

Le système selon l'invention permet d'autres configurations que celles décrites ci-dessus en référence aux figures. On peut ainsi penser à une configuration avec les caractéristiques suivantes :
- le clapet 107 est ouvert,
- le système thermodynamique fonctionne en mode de chauffage,
- le ventilateur pour l'insufflation d'air est en grande vitesse,
- le clapet 80 est fermé, et
- le ventilateur d'extraction est en petite vitesse.

Ceci permet alors un brassage de l'air préchauffé.

Une autre configuration est aussi envisageable :
- le clapet 80 est ouvert,
- le ventilateur d'extraction est en grande vitesse, et
- le clapet 107 reste fermé.

Cette dernière configuration permet d'augmenter la performance du système thermodynamique.

D'autres combinaisons encore entre les vitesses des ventilateurs et les ouvertures et fermetures des volets 107 et 64 du premier mode de réalisation et 107 et 80 du second mode de réalisation.

Comme il va de soi, l'invention ne se limite pas à la forme d'exécution décrite ci-dessus à titre d'exemple non limitatif ; elle en embrasse au contraire toutes les variantes.

Comme indiqué plus haut, toutes les valeurs numériques sont données à titre indicatif. Des débits sensiblement supérieurs ou inférieurs sont envisageables.

Le système est décrit pour une habitation. Il est bien entendu adaptable à tout autre local. De même, le nombre de pièces ou locaux techniques peut être fort différent de l'exemple donné.

Le système selon l'invention pourrait aussi exister sans système thermodynamique. Il permettrait alors une ventilation forcée avec recyclage dans les pièces. Un dispositif de filtrage permettrait alors d'avoir une filtration efficace du local.

La dérivation entre le conduit d'entrée et le second compartiment est préférable pour avoir un bon équilibrage des débits d'air entrant et sortant. Toutefois, dans certains cas, lorsque le clapet permettant de modifier les transferts d'air entre les chambres est à l'intérieur de la centrale, cette dérivation pourrait être supprimée.

Il est aussi envisageable, dans certaines pièces où l'air est insufflé, d'avoir une bouche simple débit. Il ne sera alors pas possible d'avoir un rafraîchissement, préchauffage ou ventilation forcée efficaces dans ces pièces.

## Revendications

1. Système de ventilation à double flux destiné à équiper un local comportant plusieurs pièces (2, 4a à 4d, 6, 8 à 20), comportant une centrale, au moins une bouche d'extraction (102, 104a à d, 106) destinée à extraire de l'air d'une pièce et au moins une bouche d'insufflation (108 à 120) destinée à insuffler de l'air dans une pièce, la centrale présentant une enveloppe extérieure (22) avec deux entrées et deux sorties, une entrée et une sortie étant reliées à l'extérieur du local et une entrée et une sortie étant reliées à l'intérieur du local, deux ventilateurs (34, 40) ou similaires permettant d'aspirer de l'air par une entrée pour l'envoyer vers une sortie, des cloisons (24,78) délimitant des chambres (26, 32, 36, 38) à chacune desquelles correspond soit une entrée, soit une sortie, et un clapet (64;80) permettant de modifier les transferts d'air entre les chambres,
**caractérisé en ce que**
une entrée supplémentaire débouchant dans la chambre (38) associée à la sortie (44) vers l'extérieur est prévue dans la centrale, cette entrée supplémentaire étant reliée à au moins une bouche d'extraction (102, 104a à d),
**en ce que** chaque ventilateur (34, 40) est muni de moyens lui permettant de fonctionner avec au moins deux débits distincts, et
**en ce qu'**au moins une bouche d'insufflation (108 à 120) est prévue pour le passage des flux d'air de débits différents.

2. Système selon la revendication 1, **caractérisé en ce qu'**il comporte une dérivation (66) entre l'entrée d'air (30) reliée à l'extérieur ou bien la chambre (26) correspondante et la chambre (32) associée à la sortie de la centrale vers l'intérieur du local.

3. Système selon la revendication 2, **caractérisé en ce que** le flux passant par chaque bouche d'extraction (102, 104a à d) reliée à l'entrée supplémentaire est régulé et **en ce que** le flux à travers la dérivation (66) est régulé de telle sorte que le flux à travers la dérivation est sensiblement égal au flux d'air entrant dans la centrale par l'entrée supplémentaire.

4. Système selon l'une des revendications 1 à 3, **caractérisé en ce que** le clapet permettant de modifier les transferts d'air entre les chambres est une paroi mobile (64) placée au coeur de la centrale et délimitant les chambres de celle-ci.

5. Système selon la revendication 4, **caractérisé en ce que** la paroi mobile (64) est montée pivotante entre une première position où sont mises en communication d'une part la chambre (38) associée à la sortie reliée vers l'extérieur du local et la chambre (36) associée à l'entrée reliée à l'intérieur du local, et d'autre part la chambre (26) associée à l'entrée reliée vers l'extérieur du local et la chambre (32) associée à la sortie reliée à l'intérieur du local, et une seconde position où sont mises en communication d'une part la chambre (38) associée à la sortie reliée vers l'extérieur du local et la chambre (26) associée à l'entrée reliée à l'extérieur du local, et d'autre part la chambre (36) associée à l'entrée reliée vers l'intérieur du local et la chambre (32) associée à la sortie reliée à l'intérieur du local.

6. Système selon l'une des revendications 2 ou 3, **caractérisé en ce que** le clapet (80) permettant de modifier les transferts d'air entre les chambres est monté au niveau de l'entrée reliée à l'extérieur du local, la dérivation (66) étant placée en amont du clapet (80).

7. Système selon l'une des revendications 1 à 6, **caractérisé en ce que** des moyens de filtration sont prévus, en amont des bouches d'insufflation.

8. Système selon l'une des revendications 1 à 7, **caractérisé en ce qu'**un système thermodynamique (70, 72) permettant de réchauffer ou de rafraîchir est intégré dans la centrale.

9. Système selon la revendication 8, **caractérisé en ce que** le système thermodynamique est équipé de moyens moteurs (74, 76) lui permettant de fonctionner à au moins deux puissances distinctes.

10. Système selon la revendication 9, **caractérisé en ce que** le système thermodynamique comporte deux compresseurs (74, 76) de puissances distinctes.

11. Système selon l'une des revendications 8 à 10, **caractérisé en ce que** le système thermodynamique comporte un condenseur (72) et un évaporateur (70), chacun de ceux-ci étant associé à un ventilateur (34, 40) ou similaire.

12. Système selon l'une des revendications 1 à 11, **caractérisé en ce que** chaque bouche d'insufflation (108 à 120) à double débit est alimentée par deux canaux d'air, chaque canal étant à débit régulé et l'un des canaux présentant un volet (58) ou similaire, dont l'ouverture et la fermeture sont commandées par un utilisateur et qui permet ou empêche de laisser passer de l'air vers la bouche d'insufflation.

13. Système selon l'une des revendications 1 à 12, **caractérisé en ce que** des moyens de commande sont prévus pour choisir le débit d'air souhaité dans chaque bouche d'insufflation à débit variable (108 à 120).

14. Unité centrale pour un système de ventilation à double flux selon l'une des revendications 1 à 13, comportant une enveloppe extérieure (22) avec deux entrées et deux sorties, deux ventilateurs (34, 40) ou similaires permettant d'aspirer de l'air par une entrée pour l'envoyer vers une sortie, des cloisons (24) délimitant des chambres (26, 32, 36, 38) à chacune desquelles correspond soit une entrée, soit une sortie, et un clapet (64;80) permettant de modifier les transferts d'air entre les chambres, **caractérisée en ce que**
une entrée supplémentaire débouchant dans une chambre (38) associée à une sortie est prévue, et
**en ce que** chaque ventilateur (34, 40) est muni de moyens lui permettant de fonctionner avec au moins deux débits distincts.

15. Unité centrale selon la revendication 14, **caractérisée en ce qu'**elle comporte une dérivation (66) entre une entrée (30) ou bien la chambre correspondante (26) et la chambre (32) associée à la sortie ne recevant pas l'entrée supplémentaire.

16. Unité centrale selon la revendication 15, **caractérisée en ce que** des moyens (68) sont prévus pour réguler le flux d'air à travers la dérivation (66).

17. Unité centrale selon l'une des revendications 14 à 16, **caractérisée en ce que** le clapet permettant de modifier les transferts d'air entre les chambres est une paroi mobile (64) placée au coeur de la centrale et délimitant les chambres de celle-ci.

18. Unité centrale selon la revendication 17, **caractérisée en ce que** la paroi mobile (64) est montée pivotante entre une première position où sont mises en communication d'une part la chambre (32) associée à une première sortie et la chambre (26) associée à une première entrée, et d'autre part la chambre (36) associée à une seconde entrée et la chambre (38) associée à une seconde sortie, et une seconde position où sont mises en communication d'une part la chambre (32) associée à la première sortie et la chambre (36) associée à la seconde entrée, et d'autre part la chambre (26) associée à la première entrée et la chambre (38) associée à la seconde sortie.

19. Unité centrale selon l'une des revendications 15 ou 16, **caractérisée en ce que** le clapet (80) permettant de modifier les transferts d'air entre les chambres est monté au niveau de l'entrée associée à la dérivation (66), la dérivation (66) étant placée en amont du clapet (80).

20. Unité centrale selon l'une des revendications 14 à 19, **caractérisée en ce que** des moyens de filtration sont prévus au niveau d'au moins une sortie.

21. Unité centrale selon l'une des revendications 14 à 20, **caractérisée en ce qu'**un système thermodynamique (70, 72) permettant de réchauffer ou de rafraîchir y est intégré.

22. Unité centrale selon la revendication 21, **caractérisée en ce que** le système thermodynamique est équipé de moyens moteurs (74, 76) lui permettant de fonctionner à des puissances distinctes.

23. Unité centrale selon la revendication 22, **caractérisé en ce que** le système thermodynamique comporte deux compresseurs (74, 76) de puissances distinctes.

24. Unité centrale selon l'une des revendications 21 à 23, **caractérisée en ce que** le système thermodynamique comporte un condenseur (72) et un évaporateur (70), chacun de ceux-ci étant associé à un ventilateur (34, 40) ou similaire.

## Claims

1. Double flow ventilation system intended to equip premises comprising a plurality of rooms (2, 4a to 4d, 6, 8 to 20), comprising a central unit, at least one extraction opening (102, 104a to d, 106) intended to extract air from a room and at least one input opening (108 to 120) intended to blow air into a room, the central unit having an exterior cover (22) with two inlets and two outlets, one inlet and one outlet being connected to the exterior of the premises and one inlet and one outlet being connected to the interior of the premises, two fans (34, 40) or similar allowing air to be taken in through an inlet in order to convey it towards an outlet, partitions (24, 78) delimiting the chambers (26, 32, 36, 38), to each of which there corresponds either an inlet or an outlet, and a shutter (64; 80) allowing modification of the air transfers between the chambers,
**characterised in that**
a supplementary inlet discharging into the chamber (38) associated with the outlet (44) towards the exterior is provided in the central unit, this supplementary inlet being connected to at least one extraction opening (102, 104a to d),
**in that** each fan (34, 40) is provided with means allowing it to function with at least two different capacities, and
**in that** at least one input opening (108 to 120) is provided for the passage of air flows of different capacities.

2. System according to claim 1, **characterised in that** it comprises a bypass (66) between the air inlet (30) connected to the exterior or else the corresponding chamber (26) and the chamber (32) associated with the outlet of the central unit towards the interior of the premises.

3. System according to claim 2, **characterised in that** the flow passing through each extraction opening (102, 104a to d) connected to the supplementary inlet is regulated, and **in that** the flow through the bypass (66) is regulated such that the flow through the bypass is substantially equal to the air flow entering into the central unit through the supplementary opening.

4. System according to one of the claims 1 to 3, **characterised in that** the shutter allowing modification of the air transfers between the chambers is a movable wall (64) placed in the centre of the central unit and delimiting the chambers of the latter.

5. System according to claim 4, **characterised in that** the movable wall (64) is mounted so as to pivot between a first position where there are placed in communication on the one hand the chamber (38) associated with the outlet connected towards the exterior of the premises and the chamber (36) associated with the inlet connected to the interior of the premises, and on the other hand the chamber (26) associated with the inlet connected towards the exterior of the premises and the chamber (32) associated with the outlet connected to the interior of the premises, and a second position where there are placed in communication on the one hand the chamber (38) associated with the outlet connected towards the exterior of the premises and the chamber (26) associated with the inlet connected to the exterior of the premises, and on the other hand the chamber (36) associated with the inlet connected towards the interior of the premises and the chamber (32) associated with the outlet connected to the interior of the premises.

6. System according to one of the claims 2 or 3, **characterised in that** the shutter (80) allowing modification of the air transfers between the chambers is mounted at the level of the inlet connected to the exterior of the premises, the bypass (66) being placed upstream of the shutter (80).

7. System according to one of the claims 1 to 6, **characterised in that** filtration means are provided upstream of the input openings.

8. System according to one of the claims 1 to 7, **characterised in that** a thermodynamic system (70, 72) allowing heating or cooling is integrated in the central unit.

9. System according to claim 8, **characterised in that** the thermodynamic system is equipped with motor means (74, 76) allowing it to function at at least two different powers.

10. System according to claim 9, **characterised in that** the thermodynamic system comprises two compressors (74, 76) of different powers.

11. System according to one of the claims 8 to 10, **characterised in that** the thermodynamic system comprises a condenser (72) and an evaporator (70), each of the latter being associated with a fan (34, 40) or similar.

12. System according to one of the claims 1 to 11, **characterised in that** each input opening (108 to 120) with a double capacity is fed by two air channels, each channel having a regulated capacity and one of the channels having a flap (58) or similar, the opening and the closure of which are controlled by a user and which allows or prevents the passage of air towards the input opening.

13. System according to one of the claims 1 to 12, **characterised in that** control means are provided for choosing the desired capacity of air in each input opening with a variable capacity (108 to 120).

14. Central unit for a double flow ventilation system according to one of the claims 1 to 13, comprising an exterior cover (22) with two inlets and two outlets, two fans (34, 40) or similar allowing air to be taken in through an inlet in order to convey it towards an outlet, partitions (24) delimiting the chambers (26, 32, 36, 38), to each of which there corresponds either an inlet or an outlet, and a shutter (64; 80) allowing modification of the air transfers between the chambers, **characterised in that**
a supplementary inlet discharging into a chamber (38) associated with an outlet is provided, and
**in that** each fan (34, 40) is provided with means allowing it to function with at least two different capacities.

15. Central unit according to claim 14, **characterised in that** it comprises a bypass (66) between an inlet (30) or else the corresponding chamber (26) and the chamber (32) associated with the outlet not receiving the supplementary inlet.

16. Central unit according to claim 15, **characterised in that** means (68) are provided for regulating the air flow through the bypass (66).

17. Central unit according to one of the claims 14 to 16, **characterised in that** the shutter allowing modification of the air transfers between the chambers is a movable wall (64) placed in the centre of the central unit and delimiting the chambers of the latter.

18. Central unit according to claim 17, **characterised in that** the movable wall (64) is mounted so as to pivot between a first position where there are placed in communication on the one hand the chamber (32) associated with a first outlet and the chamber (26) associated with a first inlet, and on the other hand the chamber (36) associated with a second inlet and the chamber (38) associated with a second outlet, and a second position where there are placed in communication on the one hand the chamber (32) associated with the first outlet and the chamber (36) associated with the second inlet, and on the other hand the chamber (26) associated with the first inlet and the chamber (38) associated with the second outlet.

19. Central unit according to one of the claims 15 or 16, **characterised in that** the shutter (80) allowing modification of the air transfers between the chambers is mounted at the level of the inlet associated with the bypass (66), the bypass (66) being placed upstream of the shutter (80).

20. Central unit according to one of the claims 14 to 19, **characterised in that** filtration means are provided at the level of at least one outlet.

21. Central unit according to one of the claims 14 to 20, **characterised in that** a thermodynamic system (70, 72) allowing heating or cooling is integrated therein.

22. Central unit according to claim 21, **characterised in that** the thermodynamic system is equipped with motor means (74, 76) allowing it to function at different powers.

23. Central unit according to claim 22, **characterised in that** the thermodynamic system comprises two compressors (74, 76) of different powers.

24. Central unit according to one of the claims 21 to 23, **characterised in that** the thermodynamic system comprises a condenser (72) and an evaporator (70), each of the latter being associated with a fan (34, 40) or similar.

## Patentansprüche

1. Belüftungssystem mit Doppelströmung, das zur Ausstattung von Räumlichkeiten mit mehreren Räumen (2, 4a bis 4d, 6, 8 bis 20) dient, mit einer Zentrale, mindestens einer Abzugsöffnung (102, 104a bis d, 106), die zum Abziehen von Luft aus einem Raum dient, und mindestens einer Einblasöffnung(108 bis 120), die zum Einblasen von Luft in einen Raum dient, wobei die Zentrale eine äussere Umhüllung (22) mit zwei Eingängen und zwei Ausgängen hat, wobei ein Eingang und ein Ausgang ausserhalb der Räumlichkeiten verbunden sind und ein Eingang und ein Ausgang innerhalb der Räumlichkeiten verbunden sind, und mit zwei Gebläsen (34, 40) oder dergleichen, die das Ansaugen von Luft über einen Eingang ermöglichen, um sie zu einem Ausgang zu befördern, wobei Trennwände (24; 78) Kammern (26, 32, 36, 38) begrenzen, denen jeweils entweder ein Eingang oder ein Ausgang entspricht, und mit einer Klappe (64; 80), die es gestattet, das Überführen von Luft zwischen den Kammern zu verändern,
**dadurch gekennzeichnet, dass**
ein zusätzlicher Eingang, der in die Kammer (38) mündet, die dem Ausgang (44) nach aussen zugeordnet ist, in der Zentrale vorgesehen ist, wobei dieser zusätzliche Eingang mit mindestens einer Abzugsöffnung (102, 104a bis d) verbunden ist,
dass jedes Gebläse (34, 40) mit Mitteln ausgestattet ist, die ihm gestatten, mit mindestens zwei gesonderten Durchsätzen zu arbeiten, und
dass mindestens eine Einblasöffnung (108 bis 120) für den Durchtritt der Luftströmungen unterschiedlicher Durchsätze vorgesehen ist.

2. System nach Anspruch 1, **dadurch gekennzeichnet, dass** es eine Umgehungsleitung (66) zwischen dem nach aussen hin verbundenen Lufteingang (30) oder der entsprechenden Kammer (26) und der Kammer (32) aufweist , die dem Ausgang der Zentrale ins Innere der Räumlichkeiten zugeordnet ist.

3. System nach Anspruch 2, **dadurch gekennzeichnet, dass** die durch jede mit dem zusätzlichen Eingang verbundene Abzugsöffnung (102, 104a bis d) hindurchtretende Strömung geregelt wird, und dass die Strömung durch die Umgehungsleitung (66) derart geregelt wird, dass die Strömung durch die Umgehungsleitung im wesentlichen gleich der Luftströmung ist, die über dem zusätzlichen Eingang in die Zentrale eintritt.

4. System nach einem der Ansprüche 1 bis 3, **dadurch gekennzeichnet, dass** die Klappe, die es gestattet, das Überführen von Luft zwischen den Kammern zu verändern, eine bewegliche Wand ganz im Innern der Zentrale ist und deren Kammern abgrenzt.

5. System nach Anspruch 4, **dadurch gekennzeichnet, dass** die bewegliche Wand (64) schwenkbar montiert ist zwischen einer ersten Stellung, bei der einerseits die Kammer (38), die dem Ausgang zugeordnet ist, der zum Aussenteil der Räumlichkeiten hin verbunden ist, und die Kammer (36), die dem Eingang zugeordnet ist, der mit dem Innenteil der Räumlichkeiten verbunden ist, und andererseits die Kammer (26), die dem Eingang zugeordnet ist, der zum Aussenteil der Räumlichkeiten hin verbunden ist, und die Kammer (32), die dem Ausgang zugeordnet ist, der mit dem Innenteil der Räumlichkeiten verbunden ist, in Verbindung gebracht werden, und einer zweiten Stellung, bei der einerseits die Kammer (38), die dem Ausgang zugeordnet ist, der zum Aussenteil der Räumlichkeiten hin verbunden ist, und die Kammer (26, die dem Eingang zugeordnet ist, der mit dem Aussenteil der Räumlichkeiten verbunden ist, und andererseits die Kammer (36), die dem Eingang zugeordnet ist, der zum Innenteil der Räumlichkeiten hin verbunden ist, und die Kammer (32), die dem Ausgang zugeordnet ist, der mit dem Innenteil der Räumlichkeiten verbunden ist, in verbindung gebracht werden.

6. System nach einem der Ansprüche 2 oder 3, **dadurch gekennzeichnet, dass** die Klappe (80), welche das Überführen von Luft zwischen den Kammern ermöglicht, auf der Höhe des Eingangs montiert ist, der mit dem Aussenteil der Räumlichkeiten verbunden ist, wobei die Umgehungsleitung (66) stromauf von der Klappe (80) angebracht ist.

7. System nach einem der Ansprüche 1 bis 6, **dadurch gekennzeichnet, dass** Filtermittel stromauf von den Einblasöffnungen vorgesehen sind.

8. System nach einem der Ansprüche 1 bis 7, **dadurch gekennzeichnet, dass** ein thermodynamisches System (70, 72), das ein Anwärmen oder ein Abkühlen ermöglicht, in der Zentrale integriert ist.

9. System nach Anspruch 8, **dadurch gekennzeichnet, dass** das thermodynamische System mit Motormitteln (74, 76) ausgestattet ist, die es ihm ermöglichen, mit zumindest zwei gesonderten Leistungen zu arbeiten.

10. System nach Anspruch 9, **dadurch gekennzeichnet, dass** das thermodynamische System zwei Kompressoren (74, 16) gesonderter Leistung aufweist.

11. System nach einem der Ansprüche 8 bis 10, **dadurch gekennzeichnet, dass** das thermodynamische System einen Kondensator (72) und einen Verdampfer (70) aufweist, die jeweils einem Gebläse (34, 40) oder dergleichen zugeordnet sind.

12. System nach einem der Ansprüche 1 bis 11, **dadurch gekennzeichnet, dass** jede Einblasöffnung (108 bis 120) mit Doppeldurchsatz durch zwei Luftkanäle gespeisst wird, wobei jeder Kanal einen geregelten Durchsatz hat und einer der Kanäle eine Klappe (58) oder dergleichen aufweist, deren Öffnen und Schliessen durch einen Benutzer gesteuert werden und die ermöglicht oder verhindert, dass Luft zu der Einblasöffnung hin durchgelassen wird.

13. System nach einem der Ansprüche 1 bis 12, **dadurch gekennzeichnet, dass** Steuerungsmittel vorgesehen sind, um in jeder Einblasöffnung mit veränderbarem Durchsatz (108 bis 120) den gewünschten Luftdurchsatz auszuwählen.

14. Zentraleinheit für ein Belüftungssystem mit Doppelströmung nach einem der Ansprüche 1 bis 13, mit einer äusseren Umhüllung (22) mit zwei Eingängen und zwei Ausgängen, zwei Gebläsen (34, 40) oder dergleichen, die es ermöglichen, Luft durch einen Eingang anzusaugen, um sie zu einem Ausgang zu befördern, wobei Trennwände (24) Kammern (26, 32, 36, 38) begrenzen, denen jeweils entweder ein Eingang oder ein Ausgang entspricht, und mit einer Klappe (64; 80), die es gestattet, das Überführen von Luft zwischen den Kammern abzuwandeln, **dadurch gekennzeichnet, dass** ein zusätzlicher Eingang, der in eine Kammer (38) mündet, die einem Ausgang zugeordnet ist, vorgesehen ist, und dass jedes Gebläse (34, 40) mit Mitteln ausgestattet ist, die es ihm gestatten, mit mindestens zwei gesonderten Durchsätzen zu arbeiten.

15. Zentraleinheit nach Anspruch 14, **dadurch gekennzeichnet, dass** sie eine Umgehungsleitung (66) aufweist zwischen einem Eingang (30) oder der entsprechenden Kammer (26) und der Kammer (32), die dem Ausgang zugeordnet ist, der den zusätzlichen Eingang nicht enthält.

16. Zentraleinheit nach Anspruch 15, **dadurch gekennzeichnet, dass** Mittel (68) vorgesehen sind, um die Luftströmung durch die Umgehungsleitung (66) zu regeln.

17. Zentraleinheit nach einem der Ansprüche 14 bis 16, **dadurch gekennzeichnet, dass** die Klappe, die es ermöglicht, das Überführen von Luft zwischen den Kammern zu verändern, eine bewegliche Wand (64) ist, die ganz im Innern der Zentrale angebracht ist und deren Kammern begrenzt.

18. Zentraleinheit nach Anspruch 17, **dadurch gekennzeichnet, dass** die bewegliche Wand (64) schwenkbar montiert ist zwischen einer ersten Stellung, bei der einerseits die Kammer (32), die einem ersten Ausgang zugeordnet ist, und die Kammer (26), die einem ersten Eingang zugeordnet ist, und andererseits die Kammer (36), die einem zweiten Eingang zugeordnet ist, und die Kammer (38), die einem zweiten Ausgang zugeordnet ist, in Verbindung gebracht werden, und einer zweiten Stellung, bei der einerseits die Kammer (32), die dem ersten Ausgang zugeordnet ist, und die Kammer (36), die dem zweiten Eingang zugeordnet ist, und andererseits die Kammer (26), die dem ersten Eingang zugeordnet ist, und die Kammer (38), die dem zweiten Ausgang zugeordnet ist, in Verbindung gebracht werden.

19. Zentraleinheit nach einem der Ansprüche 15 oder 16, **dadurch gekennzeichnet, dass** die Klappe (80), die es gestattet, das Überführen von Luft zwischen den Rammern zu verändern, bei dem Eingang montiert ist, der der Umgehungsleitung (66) zugeordnet ist, wobei die Umgehungsleitung (66) stromauf von der Klappe (80) angeordnet ist.

20. Zentraleinheit nach einem der Ansprüche 14 bis 19, **dadurch gekennzeichnet, dass** die Filtermittel bei mindestens einem Ausgang vorgesehen sind.

21. Zentraleinheit nach einem der Ansprüche 14 bis 20, **dadurch gekennzeichnet, dass** ein thermodynamisches System (70, 72) in ihm integriert ist, das ein Anwärmen oder Abkühlen ermöglicht.

22. Zentraleinheit nach Anspruch 21, **dadurch gekennzeichnet, dass** das thermodynamische System mit Motormitteln (74, 76) ausgestattet ist, die es ihm ermöglichen, mit gesonderten Leistungen zu arbeiten.

23. Zentraleinheit nach Anspruch 22, **dadurch gekennzeichnet, dass** das thermodynamische System zwei Kompressoren (74, 76) mit gesonderten Leistungen aufweist.

24. Zentraleinheit nach einem der Ansprüche 21 bis 23, **dadurch gekennzeichnet, dass** das thermodynamische System einen Kondensator (72) und einen Verdampfer (70) aufweist, die jeweils einem Gebläse (34, 40) oder dergleichen zugeordnet sind.
